# EUROPÄISCHE PATENTSCHRIFT

(11) **EP 3 382 735 B1**
(45) Veröffentlichungstag und Bekanntmachung des Hinweises auf die Patenterteilung: **08.05.2019**
(21) Anmeldenummer: 17164188.9
(22) Anmeldetag: 31.03.2017
(51) Int. Cl.: H01H 47/00, G05B 9/02, H01H 3/02

(54) **MODULARE SICHERHEITSSTEUERUNG ZUM SICHEREN STEUERN ZUMINDEST EINER MASCHINE**
MODULAR SAFETY CONTROL FOR SAFETY CONTROLLING AT LEAST ONE MACHINE
COMMANDE DE SÉCURITÉ MODULAIRE DESTINÉ À LA COMMANDE SÉCURISÉE D'AU MOINS UNE MACHINE

(43) Veröffentlichungstag der Anmeldung: 03.10.2018
(73) Patentinhaber: Sick AG, 79183 Waldkirch (DE)
(72) Erfinder: Saumer, Markus, 77948 Friesenheim (DE); Weidenmüller, Jonas, 79100 Freiburg (DE)

(56) Entgegenhaltungen:
- EP-A1- 2 015 341
- EP-A1- 2 720 414
- WO-A1-2008/131703
- DE-B3-102010 037 714

## Beschreibung

Die Erfindung betrifft eine modulare Sicherheitsrelaisschaltung zum sicheren Steuern zumindest einer Maschine nach Anspruch 1.

In der heutigen Automatisierungsindustrie wird eine Gesamtanlage durch zumindest eine Sicherheitssteuerung autonom derart gesteuert, dass die Maschine ihre zugeordnete Aufgabe durchführt und gegebenenfalls mit einer anderen Maschine interagiert. Hierbei muss die Gesamtanlage trotz eines hohen Automatisierungsgrads ein ausreichendes Sicherheitslevel vor möglichen Verletzungen von Personen aufweisen und dem entsprechend beispielsweise die Vorgaben der Norm EN ISO 13849 erfüllen.

Um die hohen Sicherheitsvorgaben zu erfüllen, werden mittels Sensoren beispielsweise eine Umgebung der Maschine, eine Position und/oder eine Bewegung der Maschine überwacht, wobei bei einem nicht vorgesehenen Betriebszustand die Sicherheitssteuerung zumindest eine Sicherheitsrelaiseinheit betätigt, die die Maschine abschaltet.

Die Sicherheitsrelaiseinheit ist grundsätzlich bekannt und weist Eingangsanschlüsse und Ausgangsanschlüsse auf. An den Eingangsanschlüssen erhält die Sicherheitsrelaiseinheit Eingangssignale, wobei die Eingangssignale von zumindest einem angeschlossenen Signalgeber bereitgestellt werden, und über die Ausgangsanschlüsse werden Ausgangssignale an die zumindest eine Maschine kommuniziert, wobei die Ausgangssignale von einer Steuereinheit der Sicherheitsrelaiseinheit in Abhängigkeit der Eingangssignale erstellt werden.

Zusätzlich weist die Sicherheitsrelaiseinheit zumindest eine Steuerwicklung auf, die Schalter in Form von beispielsweise Schließer bzw. Öffner schließt bzw. öffnet, so dass mittels der Schalter eine Stromversorgung der Maschine ein- bzw. ausgeschaltet werden kann. Hierbei wird bei einer Betätigung der Sicherheitsrelaiseinheit die Steuerwicklung mit Spannung versorgt, so dass sie ein Magnetfeld aufbaut, das die Schalter zum Schließen bzw. zum Öffnen und damit die Relaiskontakte aktiviert.

Im Falle eines Bedarfs von weiteren Ausgangsanschlüssen, um beispielweise weitere Maschinen zur Erweiterung der Gesamtanlage anzuschließen, können an die Sicherheitsrelaiseinheit zumindest eine Erweiterungsrelaiseinheit mit entsprechenden Ausgangsanschlüssen und Relais angeschlossen werden. Die Sicherheitsrelaiseinheit und die Erweiterungsrelaiseinheit sind elektrisch miteinander verbunden. Auf diese Weise können mehrere Erweiterungsrelaiseinheiten an die Sicherheitsrelaiseinheit angeschlossen werden, wobei die Öffner der Erweiterungsrelaiseinheiten in Reihe miteinander verbunden sind.

Um das vorgegebene Sicherheitslevel zu erreichen, überprüft die Steuereinheit der Sicherheitsrelaiseinheit eine Verkabelung der Gesamtanlage und insbesondere sämtliche angeschlossene Schalter auf Kurzschluss oder "stuck at" Fehler. Das heißt, die zwangsgeführten Relais werden auf einwandfreie Betriebsbereitschaft, insbesondere auf Öffnungsversagen, überwacht. Hierbei werden die Öffnerkontakte der zwangsgeführten Relais der Erweiterungsrelaiseinheiten mittels eines Überwachungssignals durch die Sicherheitsrelaiseinheit überwacht, so dass die Sicherheitsrelaiseinheit anhand eines Vergleichs zwischen dem Überwachungssignal und einem rückgeführten Überwachungssignal bzw. einem Rücksignal eine fehlerfreie Funktion der Relaiskontakte oder einen Kurzschluss in der Verkabelung feststellen kann.

Eine Sicherheitsrelaisschaltung gemäß dem Oberbegriff des Anspruchs 1 ist z.B. in Dokument EP2015341 A1 offenbart.

Diese bekannte Art einer Verschaltung der Überwachung der Relais weist den Nachteil auf, dass die Verkabelung der Relais der Erweiterungsrelaiseinheit zueinander aufgrund der Erweiterung der Gesamtanlage sehr aufwendig ist.

Ferner kann es bei einem Verschaltungsfehler des Überwachungskreises dazu führen, dass sich eine vorzeitige Rückführung des Überwachungssignals ergibt, so dass die nachgeschalteten Relais bei der Überwachung nicht mitberücksichtigt werden. Mit anderen Worten, die Steuereinheit der Sicherheitsrelaiseinheit erfasst fälschlicherweise eine einwandfreie Betriebsbereitschaft der Relais, obwohl das Überwachungssignal vor dem letzten Relais einer Erweiterungsrelaiseinheit rückgeführt ist und die weiteren Relais der nachfolgenden Erweiterungsrelaiseinheiten nicht überprüft sind.

Es ist daher eine Aufgabe der Erfindung, eine modulare Sicherheitsrelaisschaltung zum sicheren Steuern zumindest einer Maschine zur Verfügung zu stellen, mit der eine sichere Überwachung mit geringer Verkabelungsaufwand möglich ist.

Die Aufgabe wird erfindungsgemäß gelöst durch eine modulare Sicherheitsrelaisschaltung zum sicheren Steuern zumindest einer Maschine, mit einer Sicherheitsrelaiseinheit, die zumindest ein zwangsgeführtes Relais zum sicheren Ein- und Abschalten der Maschine aufweist und Ausgangssignale in Abhängigkeit von Eingangssignalen erzeugt, wobei die Eingangssignale von zumindest einem angeschlossenen Signalgeber bereitgestellt und die Ausgangssignale an die zumindest eine Maschine kommuniziert werden, und zumindest einer Erweiterungsrelaiseinheit zum Bereitstellen von zusätzlichen Ausgangsanschlüssen, so dass zusätzliche Maschinen anschließbar sind, wobei die Erweiterungsrelaiseinheit jeweils zumindest ein weiteres zwangsgeführtes Relais zum sicheren Ein- und Abschalten der Maschine aufweist, die Erweiterungsrelaiseinheit mittels eines Überwachungssignals auf eine Fehlfunktion durch die Sicherheitsrelaiseinheit überwacht ist, und die als letzte in der Reihe geschaltete Erweiterungsrelaiseinheit eine Abdeckung aufweist, die zumindest ein elektrisches Element mit einem definierten Widerstandswert aufweist und eine Rückführung eines dem definierten Widerstandswert entsprechenden Rücksignals an die Sicherheitsrelaiseinheit bereitstellt.

Gemäß einem bevorzugten Ausführungsbeispiel umfasst die Sicherheitsrelaiseinheit eine Steuereinheit, die das dem definierten Widerstandswert entsprechende Rücksignal erfasst und auswertet. Hierbei erkennt die Steuereinheit anhand einer Abweichung des erfassten Rücksignals zu dem den definierten Widerstandswert entsprechenden Rücksignal einen Verkabelungsfehler der modularen Sicherheitsrelaisschaltung, insbesondere einen Kabelbruch, ein Verschweißen eines Arbeitskontakts des Relais oder ähnlichem. Das heißt, es ergibt sich der Vorteil, dass die Steuereinheit der Sicherheitsrelaiseinheit anhand der Abweichung zwischen dem erfassten Rücksignal und dem den definierten Widerstandswert entsprechenden Rücksignal eine Nicht-Überwachung der nach dem oben erwähnten Verdrahtungsfehler angeschlossenen Erweiterungsrelaiseinheiten sicher ausschließen kann.

Ferner umfasst nach einem bevorzugten Ausführungsbeispiel das elektrische Element einen Widerstand, einen Kondensator oder eine Kombination aus beiden. Hierdurch kann die Abdeckung mit dem definierten Widerstandswert einfach und kostengünstig realisiert werden.

Gemäß einem weiteren bevorzugten Ausführungsbeispiel schließt die Abdeckung die angeschlossene Erweiterungsrelaiseinheit elektrisch und mechanisch ab. Hierdurch weist die erfindungsgemäße Abdeckung den Vorteil auf, dass eine Rückführung des Überwachungssignals auf einfachste Weise möglich ist. Insbesondere ist ein sehr einfacher struktureller Aufbau eines Abschlusses der modularen Sicherheitsrelaisschaltung erzielbar.

Gemäß einem weiteren bevorzugten Ausführungsbeispiel umfasst jede Erweiterungsrelaiseinheit an einem Rückführungskanal des Rücksignals eine elektrische Senke, die jeweils einen definierten Widerstandswert aufweist. Insbesondere ist der definierte Widerstandwert der jeweiligen Senke der Steuereinheit der Sicherheitsrelaiseinheit bekannt. Vorteilhafterweise ist anhand einer Summe der Widerstandwerte an dem Rückführungskanal eine Anzahl der angeschlossenen Erweiterungsmodule durch die Steuereinheit der Sicherheitsrelaiseinheit bestimmbar. Hierdurch ergibt sich der Vorteil, dass die genaue Anzahl der angeschlossenen Erweiterungsrelaiseinheiten der Sicherheitsrelaiseinheit anhand des Widerstandswertes immer genau vorliegt.

Gemäß einem weiteren bevorzugten Ausführungsbeispiel umfasst jede Erweiterungsrelaiseinheit ein separates Gehäuse mit elektrischen Anschlüssen, die an beiden Seitenwänden des Gehäuses vorgesehen sind. Hierdurch ergibt sich der Vorteil, dass die Erweiterungsrelaiseinheiten einfach per Plug & Play an die Sicherheitsrelaiseinheit angesteckt werden können und mit der Abdeckung die Rückführung für den Überwachungskreis einfach hergestellt und eine sichere Fehlerbestimmung gewährleistet werden.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Darstellung einer erfindungsgemäßen modularen Sicherheitsrelaisschaltung in einer Automatisierungsanlage, und
- Fig. 2: eine schematische Detaildarstellung der erfindungsgemäßen modularen Sicherheitsrelaisschaltung.

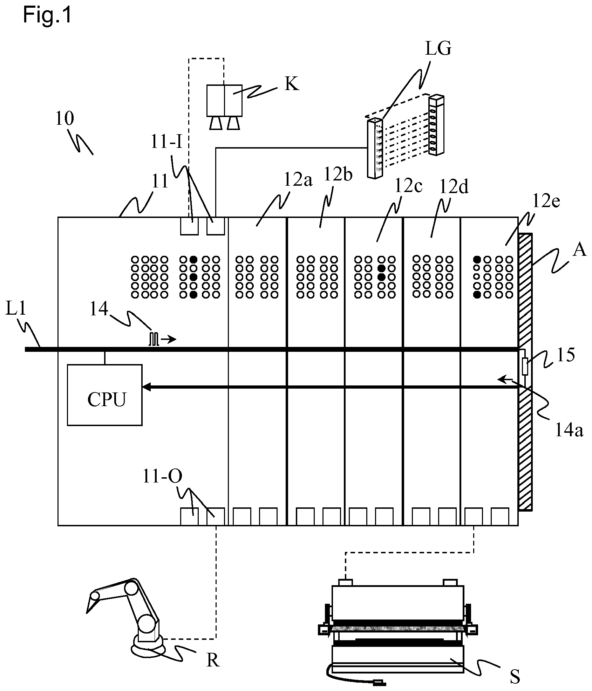

Die Figur 1 zeigt schematisch eine Automatisierungsanlage, die aus einer erfindungsgemäßen modularen Sicherheitsrelaisschaltung 10 und aus zwei von der Sicherheitsrelaisschaltung 10 angesteuerten Maschinen aufgebaut ist. Die Sicherheitsrelaisschaltung 10 schaltet einen Laststromkreis ein bzw. aus, der die, beispielhaft als Roboterarm R und als Stanze S dargestellten, Maschinen mit Energie versorgt.

Die Sicherheitsrelaisschaltung 10 umfasst eine Sicherheitsrelaiseinheit 11 und, in dem dargestellten Ausführungsbeispiel, fünf Erweiterungsrelaiseinheiten 12a, 12b, 12c, 12d und 12e, wobei an Eingangsanschlüsse 11-I der Sicherheitsrelaiseinheit 11 zwei Signalgeber, in Form einer Kamera K und eines Lichtgitters LG, angeschlossen sind. Die Kamera K und das Lichtgitter LG dienen dazu, eine Arbeitsumgebung des an die Sicherheitsrelaisschaltung 10 angeschlossenen Roboterarms R abzusichern, wobei der Roboterarm R an einem Ausgangsanschluss 11-O der Sicherheitsrelaiseinheit 11 angeschlossen ist.

Um der Sicherheitsrelaiseinheit 11 zusätzlich benötigte Ausgangsanschlüsse zum Anschließen zusätzlicher Maschinen, wie beispielsweise die Stanze S, zur Verfügung stellen zu können, sind an die Sicherheitsrelaiseinheit 11 die weiteren fünf Erweiterungsrelaiseinheiten 12a - 12e angeschlossen, wobei die Stanze S an einem Ausgangsanschluss der fünften Erweiterungsrelaiseinheit 12e angeschlossen ist.

Hierbei weist jede Erweiterungsrelaiseinheit 12a - 12e ein separates Gehäuse mit elektrischen Anschlüssen auf, die an beiden Seitenwänden des Gehäuses vorgesehen sind, so dass die Erweiterungsrelaiseinheiten 12a - 12e einfach seitlich aneinander und an die Sicherheitsrelaiseinheit 11 aufgesteckt werden können. Hierdurch sind die Sicherheitsrelaiseinheit 11 und die Erweiterungsrelaiseinheiten 12a - 12e elektrisch miteinander verbunden, so dass die Erweiterungsrelaiseinheiten 12a - 12e mittels eines Überwachungssignals 14 auf eine Fehlfunktion durch die Sicherheitsrelaiseinheit 11 überwacht sind.

Erfindungsgemäß weist die als letzte in der Reihe geschaltete Erweiterungsrelaiseinheit 12e eine Abdeckung A auf, die eine Rückführung des Überwachungssignals bzw. eines Rücksignals 14a an die Sicherheitsrelaiseinheit 11 bereitstellt und zumindest ein elektrisches Element 15 mit einem definierten Widerstandswert aufweist. Hierdurch ist zumindest ein Überwachungskreis von der Sicherheitsrelaiseinheit 11 über alle Erweiterungsrelaiseinheiten 12a - 12e bis zu der Abdeckung A und zurück an die Sicherheitsrelaiseinheit 11 erstellt, wobei das Rücksignal 14a entsprechend dem definierten Widerstandswert des elektrischen Elements 15 ausgebildet ist.

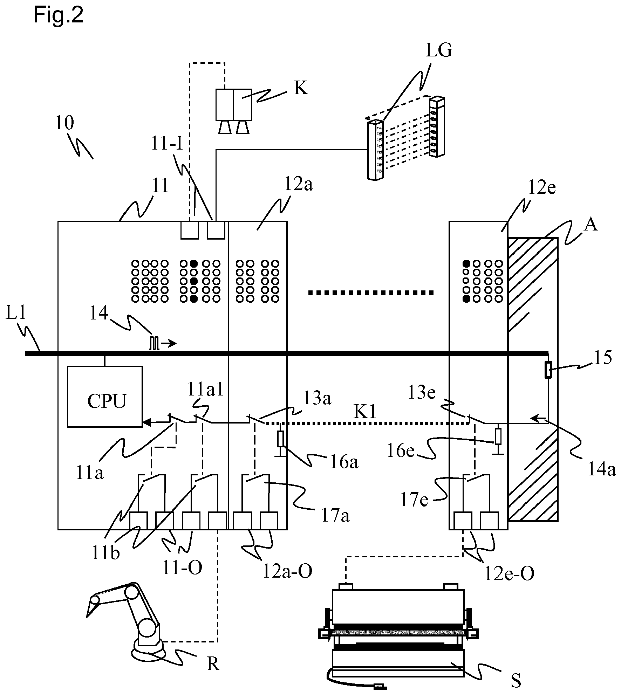

In der Figur 2 ist eine schematische Detaildarstellung der Sicherheitsrelaiseinheit 11 und der beispielhaften Erweiterungsrelaiseinheiten 12a und 12e der erfindungsgemäßen modularen Sicherheitsrelaisschaltung 10 gezeigt.

Die Sicherheitsrelaiseinheit 11 weist die Eingangsanschlüsse 11-I und die Ausgangsanschlüsse 11-O auf. An den Eingangsanschlüssen 11-I sind die Kamera K und das Lichtgitter LG als Signalgeber angeschlossen, die Eingangssignale an eine Steuereinheit CPU der Sicherheitsrelaiseinheit 11 bereitstellen. Die Sicherheitsrelaiseinheit 11 weist zumindest ein zwangsgeführtes Relais auf, wobei das Relais dazu dient, bei einem Fehlerfall den Laststromkreis zu dem Roboterarm R zu unterbrechen, so dass der Roboterarm R abgeschaltet werden kann. Hierbei erzeugt die Steuereinheit CPU der Sicherheitsrelaiseinheit 11 Ausgangssignale in Abhängigkeit von den Eingangssignalen der Signalgeber und kommuniziert die Ausgangssignale an das Relais bzw. an den Roboterarm R.

Das zwangsgeführte Relais der Sicherheitsrelaiseinheit 11 umfasst in dem dargestellten Ausführungsbeispiel zwei Öffner 11a und 11a1 und zwei Schließer 11b, wobei die Schließer 11b im Fehlerfall den Laststromkreis zu dem Roboterarm R unterbricht. Die Öffner 11a und 11a1 dienen der Überwachung der einwandfreien Betriebsbereitschaft der Schließer 11b, insbesondere Öffnungsversagen der Schließer 11b, und sind im Überwachungskreis elektrisch in Reihe geschaltet.

An die Sicherheitsrelaiseinheit 11 sind die Erweiterungsrelaiseinheiten 12a - 12e elektrisch angeschlossen, um der Sicherheitsrelaiseinheit 11 mehr Ausgangsanschlüsse 12a-O bis 12e-O zur Verfügung zu stellen, wobei beispielsweise an dem Ausgangsanschluss 12e-O der Erweiterungsrelaiseinheit 12e die Stanze S angeschlossen ist, die durch die Sicherheitsrelaiseinheit 11 angesteuert wird. Die Sicherheitsrelaiseinheit 11 versorgt über eine Leitung L1 alle Erweiterungsrelaiseinheiten 12a und 12e mit Spannung.

Jede Erweiterungsrelaiseinheit 12a - 12e weist jeweils zumindest ein zwangsgeführtes Relais mit Öffner 13a bis 13e und Schließer 17a bis 17e auf, wobei nur die Öffner 13a und 13e und die Schließer 17a und 17e der Erweiterungsrelaiseinheiten 12a und 12e dargestellt sind. Die Schließer 17a und 17e der Erweiterungsrelaiseinheiten 12a und 12e schalten die an den Ausgangsanschlüssen 12a-O und 12e-O der Erweiterungsrelaiseinheiten 12a und 12e angeschlossenen Maschinen ein bzw. aus - im Falle der Erweiterungsrelaiseinheit 12e ist es die Stanze S.

An die in der Reihe als letzte angeschlossene Erweiterungsrelaiseinheit 12e ist die erfindungsgemäße Abdeckung A aufgesteckt, die die modulare Sicherheitsrelaisschaltung 10 sowohl elektrisch als auch mechanisch abschließt. Hierbei umfasst die Abdeckung A zumindest ein elektrisches Element 15, das einen definierten Widerstandswert aufweist, der von der Steuereinheit CPU der Sicherheitsrelaiseinheit 11 klar von einem Kurzschluss unterschieden wird. Das elektrische Element 15 kann einen Widerstand, einen Kondensator oder eine Kombination aus beiden umfassen.

Mittels des elektrischen Elements 15 der Abdeckung A ist zumindest ein Überwachungskreis von der Sicherheitsrelaiseinheit 11 über die Erweiterungsrelaiseinheiten 12a und 12e zu der Abdeckung A und zurück zu der Sicherheitsrelaiseinheit 11 vorgesehen. Der Überwachungskreis ist aus der Steuereinheit CPU der Sicherheitsrelaiseinheit 11, der Leitung L1, dem elektrischen Element 15 der Abdeckung A und den Öffnern 13a bis 13e der Erweiterungsrelaiseinheiten 12e und 12a gebildet, so dass ein erster Überwachungskanal K1 für die modulare Sicherheitsrelaisschaltung 10 vorgesehen ist.

Das heißt, die Steuereinheit CPU der Sicherheitsrelaiseinheit 11 sendet ein Überwachungssignal 14, beispielsweise in Form einer 24V Spannung, über die Leitung L1, das über den Überwachungskanal K1, insbesondere dem elektrischen Element 15 der Abdeckung A und den Öffnern 13a bis 13e der Erweiterungsrelaiseinheiten 12e und 12a in Form des dem Widerstandswert des elektrischen Elements 15 entsprechenden Rücksignals 14a rückgeführt ist.

Bei der Überwachung der Betriebsbereitschaft der modularen Sicherheitsrelaisschaltung 10 erfasst die Steuereinheit CPU das rückgeführte Rücksignal 14a des Überwachungskanals K1 und vergleicht das erfasste Rücksignal 14a mit dem der definierte Widerstandswert des elektrischen Elements 15 entsprechenden zu erwartenden Rücksignals 14a, so dass anhand eines Unterschiedes zwischen dem erfassten Rücksignal 14a und dem erwarteten Rücksignal 14a die Sicherheitsrelaiseinheit 11 einen Kurzschluss der Leitung der modularen Sicherheitsrelaisschaltung 10 bzw. ein Verschweißen der Schließer 11b, 17a und 17e bestimmen kann.

Erfindungsgemäß kann die Sicherheitsrelaiseinheit 11 anhand einer definierten Änderung des Überwachungssignals 14 durch den definierten Widerstandswert des elektrischen Elements 15 der Abdeckung A das oben erwähnte zu erwartende Rücksignal 14a sicher feststellen, dass der Überwachungskanal K1 bei der Überwachung vollständig durchlaufen ist.

Beispielsweise im Falle eines Verdrahtungsfehlers an der Erweiterungsrelaiseinheit 12a, der durch mechanische Überbeanspruchung, wie z.B. verbogene Kontakte, oder unzulässige Verunreinigungen hervorgerufen ist, kann das Überwachungssignal 14 bereits an der Erweiterungsrelaiseinheit 12a zurück an die Sicherheitsrelaiseinheit 11 geführt werden, so dass sich die weiteren Erweiterungsrelaiseinheiten 12b bis 12e nicht mehr im Überwachungskreis befinden bzw. die weiteren Erweiterungsrelaiseinheiten 12b bis 12e nicht mehr überwacht werden.

Da das über die Erweiterungsrelaiseinheit 12a rückgeführte Überwachungssignal 14 jedoch nicht dem den definierten Widerstandswert des elektrischen Elements 15 der Abdeckung A entsprechenden Rücksignal 14a gleicht, stellt die Sicherheitsrelaiseinheit 11 erfindungsgemäß diesen Fehlerzustand sicher fest, so dass die Sicherheitsrelaiseinheit 11 entsprechend reagieren kann.

Mit anderen Worten, durch die Überwachung der aus dem definierten Widerstandwert des elektrischen Elements 15 resultierenden Rücksignale 14a kann die erfindungsgemäße Sicherheitsrelaisschaltung 10 sowohl einen Kurzschluss als auch ein Verschweißen der Schließer 11b, 17a bis 17e, insbesondere den oben erwähnten Fehlerfall, sicher identifizieren.

Zusätzlich umfasst jede Erweiterungsrelaiseinheit 12a und 12e gemäß dem dargestellten Ausführungsbeispiel an dem zumindest einen Überwachungskanal K1 des Rücksignals 14a eine elektrische Senke 16a und 16e, die beispielsweise in Form eines Widerstandes, eines Kondensators oder einer Kombination aus beiden bestehen. Hierbei wird unter elektrische Senke 16a und 16e ein elektrisches Element verstanden, das elektrische Energie aufnimmt. Jede elektrische Senke 16a und 16e weist einen definierten Widerstandswert auf, der der Steuereinheit CPU der Sicherheitsrelaiseinheit 11 bekannt ist und vorzugsweise verschieden zu den definierten Widerstandwerten der elektrischen Elemente 15 ist.

Mit Anschluss jeder Erweiterungsrelaiseinheit 12a - 12e verändert sich das Rücksignal 14a entsprechend der Anzahl der Senken 16a und 16e. Die durch die Senken 16a und 16e definierte Änderung des Rücksignals 14a ermöglicht die Sicherheitsrelaiseinheit 11 exakt zu bestimmen, wie viele Erweiterungsrelaiseinheiten 12a - 12e an die Sicherheitsrelaiseinheit 11 angeschlossen sind.

Mit anderen Worten, jede Senke 16a und 16e verändert die Größe des Rücksignals 14a in einem definierten Maß wie das elektrische Element 15 der Abdeckung A, so dass anhand einer Summe der Widerstandswerte der Senken 16a und 16e an dem Rückführungskanal K1 eine Anzahl der angeschlossenen Erweiterungsmodule 12a - 12e durch die Sicherheitsrelaiseinheit 11 genau bestimmbar ist.

### Bezugszeichenliste

- 10: Modulare Sicherheitsrelaisschaltung
- 11: Sicherheitsrelaiseinheit
- 11a,: Öffner der Sicherheitsrelaiseinheit
- 11b: Schließer der Sicherheitsrelaiseinheit
- 11-I: Eingangsanschluss der Sicherheitsrelaiseinheit
- 11-O: Ausgangsanschluss der Sicherheitsrelaiseinheit
- 12a - 12e: Erweiterungsrelaiseinheit
- 12a-O, 12e-O: Ausgangsanschluss der Erweiterungsrelaiseinheit
- 13a, 13e: Öffner der Erweiterungsrelaiseinheit
- 14: Überwachungssignal
- 14a,: Rücksignal
- 15: Elektrisches Element
- 16a, 16e: Elektrische Senke
- 17a, 17e: Schließer der Erweiterungsrelaiseinheit
- A: Abdeckung
- CPU: Steuereinheit
- K: Kamera
- K1: Rückführungskanal
- L1: Leitung
- LG: Lichtgitter
- R: Roboterarm
- S: Stanze

## Patentansprüche

1. Modulare Sicherheitsrelaisschaltung (10) zum sicheren Ein- oder Ausschalten zumindest einer Maschine (R, S), mit
einer Sicherheitsrelaiseinheit (11), die zumindest ein zwangsgeführtes Relais zum sicheren Ein- und Abschalten der Maschine (R) aufweist und Ausgangssignale in Abhängigkeit von Eingangssignalen erzeugt, wobei die Eingangssignale von zumindest einem angeschlossenen Signalgeber (K, LG) bereitgestellt und die Ausgangssignale an die zumindest eine Maschine (R, S) kommuniziert werden, und
zumindest einer Erweiterungsrelaiseinheit (12a - 12e) zum Bereitstellen von zusätzlichen Ausgangsanschlüssen (12a-O, 12e-O), so dass zusätzliche Maschinen (S) anschließbar sind,
wobei die Erweiterungsrelaiseinheit (12a - 12e) jeweils zumindest ein zwangsgeführtes Relais zum sicheren Ein- und Abschalten der Maschine (S) aufweist, die Erweiterungsrelaiseinheit (12a - 12e) mittels eines Überwachungssignals (14) auf eine Fehlfunktion durch die Sicherheitsrelaiseinheit (11) überwacht ist, **dadurch gekennzeichnet, dass** die als letzte geschaltete Erweiterungsrelaiseinheit (12e) eine Abdeckung (A) aufweist, die zumindest ein elektrisches Element (15) mit einem definierten Widerstandswert aufweist und eine Rückführung eines dem definierten Widerstandswert entsprechenden rückgeführten Rücksignals (14a) an die Sicherheitsrelaiseinheit (11) bereitstellt.

2. Modulare Sicherheitsrelaisschaltung (10) nach Anspruch 1, wobei die Sicherheitsrelaiseinheit (11) eine Steuereinheit (CPU) umfasst, die das dem definierten Widerstandswert des elektrischen Elements (15) entsprechende Rücksignal (14a) erfasst und auswertet.

3. Modulare Sicherheitsrelaisschaltung (10) nach Anspruch 1 oder 2, wobei das elektrische Element (15) einen Widerstand, einen Kondensator oder eine Kombination aus beiden umfasst.

4. Modulare Sicherheitsrelaisschaltung (10) nach einem der vorhergehenden Ansprüche, wobei die Abdeckung (A) die angeschlossene Erweiterungsrelaiseinheit (12e) elektrisch und mechanisch abschließt.

5. Modulare Sicherheitsrelaisschaltung (10) nach einem der vorhergehenden Ansprüche, wobei jede Erweiterungsrelaiseinheit (12a - 12e) an einem Rückführungskanal (K1) des rückgeführten Überwachungssignals (14a) eine elektrische Senke (16a, 16e) umfasst, die jeweils einen definierten Widerstandswert aufweist.

6. Modulare Sicherheitsrelaisschaltung (10) nach Anspruch 5, wobei der definierte Widerstandwert der jeweiligen Senke (16a, 16e) der Steuereinheit der Sicherheitsrelaiseinheit (11) bekannt ist.

7. Modulare Sicherheitsrelaisschaltung (10) nach Anspruch 5 oder 6, wobei anhand einer Summe der Widerstandwerte an dem Rückführungskanal (K1) eine Anzahl der angeschlossenen Erweiterungsrelaiseinheiten (12a - 12e) durch die Steuereinheit der Sicherheitsrelaiseinheit (11) bestimmbar ist.

8. Modulare Sicherheitsrelaisschaltung (10) nach einem der Ansprüche 5 bis 7, wobei der Widerstandswert der Senke (16a, 16e) verschieden zu dem definierten Widerstandswert des elektrischen Elements (15) der Abdeckung (A) ist.

9. Modulare Sicherheitsrelaisschaltung (10) nach einem der vorhergehenden Ansprüche, wobei jede Erweiterungsrelaiseinheit (12a - 12e) ein separates Gehäuse mit elektrischen Anschlüssen umfasst, die an beiden Seitenwänden des Gehäuses vorgesehen sind.

## Claims

1. Modular safety relay circuit (10) for safely switching on or off at least one machine (R, S), having
a safety relay unit (11) which has at least one positively guided relay for safely switching on and off the machine (R) and generates output signals as a function of input signals, wherein the input signals are provided by at least one connected signal generator (K, LG) and the output signals are communicated to the at least one machine (R, S), and
at least one extension relay unit (12a - 12e) for providing additional output terminals (12a-O, 12e-O) so that additional machines (S) can be connected, wherein the extension relay unit (12a - 12e) has in each case at least one positively guided relay for safely switching on and off of the machine (S), the extension relay unit (12a - 12e) is monitored by means of a monitoring signal (14) for a malfunction by the safety relay unit (11),
**characterized in that** the extension relay unit (12e) which is connected last has a cover (A) which has at least one electrical element (15) with a defined resistance value and provides a feedback of a feedback signal (14a) which corresponds to the defined resistance value to the safety relay unit (11).

2. Modular safety relay circuit (10) according to claim 1, wherein the safety relay unit (11) comprises a control unit (CPU) which detects and evaluates the return signal (14a) corresponding to the defined resistance value of the electrical element (15).

3. Modular safety relay circuit (10) according to claim 1 or 2, wherein the electrical element (15) comprises a resistor, a capacitor or a combination of both.

4. Modular safety relay circuit (10) according to one of the preceding claims,
wherein the cover (A) electrically and mechanically terminates the connected extension relay unit (12e).

5. Modular safety relay circuit (10) according to one of the preceding claims,
wherein each extension relay unit (12a - 12e) comprises at a feedback channel (K1) of the feedback monitoring signal (14a) an electrical sink (16a, 16e) each having a defined resistance value.

6. Modular safety relay circuit (10) according to claim 5, wherein the defined resistance value of the respective sink (16a, 16e) of the control unit of the safety relay unit (11) is known.

7. Modular safety relay circuit (10) according to claim 5 or 6, wherein a number of connected extension relay units (12a - 12e) is determinable on the basis of a sum of the resistance values on the feedback channel (K1) by the control unit of the safety relay unit (11).

8. Modular safety relay circuit (10) according to any one of claims 5 to 7, wherein the resistance value of the sink (16a, 16e) is different from the defined resistance value of the electrical element (15) of the cover (A).

9. Modular safety relay circuit (10) according to one of the preceding claims,
wherein each extension relay unit (12a-12e) comprises a separate housing having electrical terminals provided on both sidewalls of the housing.

## Revendications

1. Circuit modulaire de relais de sécurité (10) pour la mise en marche ou l'arrêt en toute sécurité d'au moins une machine (R, S), comportant
une unité de relais de sécurité (11) qui présente au moins un relais guidé positivement pour la mise en marche et l'arrêt sûrs de la machine (R) et génère des signaux de sortie en fonction de signaux d'entrée, les signaux d'entrée étant fournis par au moins un générateur de signaux connecté (K, LG) et les signaux de sortie étant communiqués à la au moins une machine (R, S), et
au moins une unité de relais d'extension (12a - 12e) pour fournir des bornes de sortie supplémentaires (12a-O, 12e-O) afin que des machines supplémentaires (S) puissent être connectées,
dans laquelle l'unité de relais d'extension (12a - 12e) présente à chaque fois au moins un relais guidé positivement pour la mise en marche et l'arrêt sûrs de la machine (S), l'unité de relais d'extension (12a - 12e) est surveillée au moyen d'un signal de surveillance (14) pour un défaut de fonctionnement de l'unité de relais de sécurité (11),
**caractérisé en ce que** l'unité de relais d'extension (12e) qui est raccordée en dernier a un couvercle (A) qui présente au moins un élément électrique (15) ayant une valeur de résistance définie et qui fournit un signal de retour (14a) qui correspond à la valeur de résistance définie à l'unité de relais de sécurité (11).

2. Circuit de relais de sécurité modulaire (10) selon la revendication 1, l'unité de relais de sécurité (11) comprenant une unité de commande (CPU) qui détecte et évalue le signal de retour (14a) correspondant à la valeur de résistance définie de l'élément électrique (15).

3. Circuit de relais de sécurité modulaire (10) selon la revendication 1 ou 2, dans lequel l'élément électrique (15) comprend une résistance, un condensateur ou une combinaison des deux.

4. Circuit de relais de sécurité modulaire (10) selon l'une des revendications précédentes, dans lequel le couvercle (A) termine électriquement et mécaniquement l'unité de relais d'extension (12e) connectée.

5. Circuit de relais de sécurité modulaire (10) selon l'une des revendications précédentes, dans lequel chaque unité de relais d'extension (12a - 12e) comprend sur un canal de retour (K1) du signal de surveillance de retour (14a) un puits électrique (16a, 16e) ayant chacun une valeur de résistance définie.

6. Circuit de relais de sécurité modulaire (10) selon la revendication 5, dans lequel la valeur de résistance définie du puits respectif (16a, 16e) de l'unité de commande du relais de sécurité (11) est connue.

7. Circuit de relais de sécurité modulaire (10) selon la revendication 5 ou 6, dans lequel un certain nombre d'unités de relais d'extension connectées (12a - 12e) peut être déterminé sur la base d'une somme des valeurs de résistance du canal de retour (K1) par l'unité de commande du relais de sécurité (11).

8. Circuit de relais de sécurité modulaire (10) selon l'une quelconque des revendications 5 à 7, dans lequel la valeur de résistance de l'évier (16a, 16e) est différente de la valeur de résistance définie de l'élément électrique (15) du couvercle (A).

9. Circuit de relais de sécurité modulaire (10) selon l'une des revendications précédentes, dans lequel chaque unité de relais d'extension (12a-12e) comprend un boîtier séparé ayant des bornes électriques prévues sur les deux parois latérales du boîtier.
